# EUROPEAN PATENT APPLICATION

(11) **EP 4 819 429 A1**
(43) Date of publication of application: **07.10.2026**
(21) Application number: 24895686.4
(22) Date of filing: 25.07.2024
(51) Int. Cl.: H02J 3/38, H02P 21/22

(54) **CONVERTER CONTROL METHOD AND CONTROL DEVICE FOR VOLTAGE SOURCE WIND TURBINE GENERATOR**

(30) Priority: 27.11.2023 CN 202311624956
(71) Applicant: GOLDWIND SCIENCE & TECHNOLOGY CO., LTD., Xinjiang 830026 (CN)
(72) Inventor: MAO, Shaoran, Beijing 100176 (CN); RUAN, Jingfeng, Beijing 100176 (CN); YU, Xiao, Beijing 100176 (CN); JING, Shuang, Beijing 100176 (CN)
(74) Representative: Hoffmann Eitle
(86) International application number: PCT/CN2024/107554
(87) International publication number: WO 2025/112583

(57) **Abstract**

The present disclosure provides a converter control method and control device for a voltage source wind turbine generator. The converter control method comprises: determining a reactive current given value and an active current given value of a generator-side converter; determining a direct-current voltage damping output value on the basis of the active current given value; determining a modulation voltage reference value of the generator-side converter on the basis of the reactive current given value, the active current given value, and an input current of the generator-side converter; and controlling operation of the generator-side converter on the basis of the modulation voltage reference value of the generator-side converter.

## Description

### FIELD

The present disclosure relates to the field of wind power generation, and more particularly, to a converter control method and a converter control apparatus for a voltage-source wind turbine.

### BACKGROUND

A wind turbine is a device that converts wind energy into electrical energy. In a voltage-source wind turbine, a machine-side converter is configure to convert alternating current output by the wind turbine into direct current, thereby achieving the control of a direct current (DC) bus voltage. A grid-side converter is configured to convert the direct current into the alternating current by using a virtual synchronous generator control technology. However, in the related art, the machine-side converter and the grid-side converter are generally controlled independently, and the difference in control performances between the machine-side converter and the grid-side converter during converter operation is not considered.

### SUMMARY

An objective of embodiments of the present disclosure is to provide a converter control method and a converter control apparatus for a voltage-source wind turbine, which can avoid low-frequency oscillation of a direct current (DC) bus voltage of a converter, effectively improve the stability of converter control, and reduce the usage frequency of a braking resistor of the machine-side converter.

In a general aspect, a converter control method for a voltage-source wind turbine is provided, the control method including: determining a reactive current reference value and an active current reference value of a machine-side converter based on a field-weakening voltage value, an input voltage of the machine-side converter of the wind turbine, and a direct current (DC) bus voltage measured value and a DC bus voltage reference value of the machine-side converter; determining a DC voltage damping output value based on the active current reference value, the DC voltage damping output value is configured to determine an active power reference value of a grid-side converter of the wind turbine; determining a modulation voltage reference value of the machine-side converter based on the reactive current reference value, the active current reference value, and an input current of the machine-side converter; and controlling operation of the machine-side converter according to the modulation voltage reference value of the machine-side converter.

In another general aspect, a converter control apparatus for a voltage-source wind turbine is provided, the control apparatus including: a current reference value determination unit configured to determine a reactive current reference value and an active current reference value of a machine-side converter based on a field-weakening voltage value, an input voltage of the machine-side converter of the wind turbine, and a direct current (DC) bus voltage measured value and a DC bus voltage reference value of the machine-side converter; a damping determination unit configured to determine a DC voltage damping output value based on the active current reference value, wherein the DC voltage damping output value is configured to determine an active power reference value of a grid-side converter of the wind turbine; a first voltage reference value determination unit configured to determine a modulation voltage reference value of the machine-side converter based on the reactive current reference value, the active current reference value, and an input current of the machine-side converter; and a first control unit configured to control operation of the machine-side converter according to the modulation voltage reference value of the machine-side converter.

In another general aspect, a computing device is provided, the computing device including: a processor; a memory storing a computer program, wherein when the computer program is executed by the processor, the converter control method for a voltage-source wind turbine as described above is implemented.

In another general aspect, a voltage-source wind turbine is provided, the voltage-source wind turbine including the converter control appratus as described above or the computing device as described above.

According to the converter control method and the converter control apparatus for a voltage-source wind turbine of the embodiments of the present disclosure, by calculating a damping output value in a machine-side control strategy of a converter controller and applying the damping output value in a grid-side control strategy to achieve damping-based control, the control stability of the voltage-source wind turbine during high-power operation is improved, the problem of low-frequency oscillation divergence in the DC bus voltage of the converter and the generator torque is avoided, the risk of shutdown due to frequent activation of the braking resistor of the machine-side converter and converter fault is effectively reduced, and the power generation loss of the wind turbine due to faults is reduced.

### BRIEF DESCRIPTION OF THE DRAWINGS

The above and other objectives and features of the present disclosure will become more apparent from the following description made in conjunction with the accompanying drawings.
FIG. 1 is a schematic block diagram illustrating a converter control strategy for a wind turbine;
FIG. 2A is a flowchart illusrating a converter control method for a voltage-source wind turbine according to an embodiment of the present disclosure, and FIG. 2B is a schematic block diagram illusrating the converter control method for a voltage-source wind turbine according to an embodiment of the present disclosure;
FIG. 3A is a flowchart illusrating a converter control method for a voltage-source wind turbine according to another embodiment of the present disclosure, and FIG. 3B is a schematic block diagram illusrating the converter control method for a voltage-source wind turbine according to another embodiment of the present disclosure;
FIG. 4 is a block diagram illusrating a converter control apparatus for a voltage-source wind turbine according to an embodiment of the present disclosure;
FIG. 5 is a block diagram illusrating a computing device according to an embodiment of the present disclosure;
FIG. 6 is a graph illusrating curves of a DC bus voltage and a generator torque during high-power operation of an existing voltage-source wind turbine without damping-based control; and
FIG. 7 is a graph illusrating curves of a DC bus voltage and a generator torque during high-power operation of a voltage-source wind turbine according to an embodiment of the present disclosure.

### DETAILED DESCRIPTION OF THE EMBODIMENTS

The following detailed description is provided to assist the reader in obtaining a comprehensive understanding of the methods, devices, and/or systems described herein. However, various changes, modifications, and equivalents of the methods, devices, and/or systems described herein will be apparent upon an understanding of the disclosure of the present application. For example, the sequences of operations described herein are merely examples, and are not limited to those set forth herein, but may be changed as will be clear upon an understanding of the disclosure of the present application, except for operations that must occur in a particular order. Furthermore, descriptions of features known in the art may be omitted for greater clarity and conciseness.

The features described herein may be embodied in different forms, and should not be construed as being limited to the examples described herein. Rather, the examples described herein have been provided merely to illustrate some of the many possible ways of implementing the methods, devices, and/or systems described herein, which will be apparent upon an understanding of the disclosure of the present application.

As used herein, the term "and/or" includes any one and any combination of any two or more of the associated listed items.

Although terms such as "first," "second," and "third" may be used herein to describe various members, components, regions, layers, or parts, these members, components, regions, layers, or parts should not be limited by these terms. Rather, these terms are only used to distinguish one member, component, region, layer, or part from another member, component, region, layer, or part. Thus, a first member, first component, first region, first layer, or first part referred to in the examples described herein may also be referred to as a second member, second component, second region, second layer, or second part without departing from the teachings of the examples.

In the specification, when an element (such as a layer, region, or substrate) is described as being "on," "connected to," or "coupled to" another element, it can be directly "on," directly "connected to," or directly "coupled to" the other element, or one or more other elements may be interposed therebetween. In contrast, when an element is described as being "directly on," "directly connected to," or "directly coupled to" another element, there may be no other elements interposed therebetween.

The terminology used herein is for the purpose of describing various examples only and is not intended to limit the disclosure. The singular forms are also intended to include the plural forms unless the context clearly indicates otherwise. The terms "comprises," "includes," and "having" indicate the presence of stated features, numbers, operations, members, elements, and/or combinations thereof, but do not preclude the presence or addition of one or more other features, numbers, operations, members, elements, and/or combinations thereof.

Unless otherwise defined, all terms (including technical and scientific terms) used herein have the same meaning as commonly understood by one of ordinary skill in the art to which the present disclosure belongs after understanding the present disclosure. Unless explicitly defined as such herein, terms (such as those defined in general dictionaries) should be interpreted as having a meaning that is consistent with their meaning in the context of the relevant art and the present disclosure, and should not be interpreted in an idealized or overly formal sense.

Furthermore, in the description of the examples, when a detailed description of a well-known related structure or function is considered to cause an ambiguous interpretation of the present disclosure, such detailed description will be omitted.

A converter of a wind turbine includes a machine-side converter and a grid-side converter. Under high-power operation of the converter, it is required to perform power control of the machine-side converter and the grid-side converter while achieving the stability of the direct current (DC) bus voltage. Therefore, in a grid-forming wind turbine (i.e., a voltage-source wind turbine), a control bandwidth required for controlling the DC bus voltage of the converter is generally several tens of Hertz, to ensure that the voltage can be quickly and dynamically regulated when the wind turbine transmits power to the grid. Futher, for the grid-side converter, a virtual synchronous generator control technology is applied to generate an internal electromotive force (i.e., a virtual internal electromotive force) which has a slow dynamic characteristic and requires a control bandwidth to be typically below 5 Hertz. As such, the inconsistency between the machine-side control bandwidth between the and the grid-side control bandwidth results in a relatively large power difference in the DC capacitor between the machine-side and the grid-side, which in turn causes continuous low-frequency oscillations in the DC bus voltage of the converter and the generator torque. The low-frequency oscillation in the generator torque will adversely affect a drivetrain system of the wind turbine, while the low-frequency oscillation in the DC bus voltage will cause frequent activation of a braking resistor of the machine-side converter until the machine-side converter detects a fault and trips. Therefore, under high-power operation of the converter, the wind turbine cannot operate stably in a steady state, which severely reduces a service life of the braking resistor of the machine-side converter and also increases power generation loss of the wind turbine.

Furthermore, under high-power operation of the wind turbine, when the wind speed fluctuates significantly, the machine-side power will fluctuate significantly. At this time, the machine-side converter is required to achieve fast regulation of the DC bus voltage, thereby achieving rapidity of machine-side power control. Moreover, the grid-side converter uses a virtual synchronous generator (VSG) control method with a slow dynamic characteristic, where respective operating bandwidths of a reactive power/voltage loop and a synchronization loop are relatively small, causing a lower response speed of the grid-side power control compared with the machine-side power control. As such, it leads to a deterioration in electromechanical coupling of the wind turbine under high-power operation, and at the same time, an unbalanced power will easily be generated in the DC capacitor of the converter, resulting in low-frequency oscillation divergence of the generator torque and the DC bus voltage. When the oscillation of the DC bus voltage is excessively severe, the braking resistor of the machine-side converter will be activated, and a strong generator torque oscillation will reduce stability of the drivetrain of the wind turbine. Therefore, the wind turbine will shut down due to triggering of safety protection caused by the low-frequency oscillation.

To this end, embodiments of the present disclosure provide a converter control method and a converter control apparatus for a voltage-source wind turbine. By calculating a damping output value in a machine-side control strategy of a converter controller and applying the damping output value in a grid-side control strategy to achieve damping-based control, the dynamic performance of the grid-side converter and the balance between machine-side power and grid-side power are improved, thereby avoiding low-frequency oscillation of the DC bus voltage of the converter, effectively improving the stability of converter control, and reducing the usage frequency of the braking resistor of the machine-side converter.

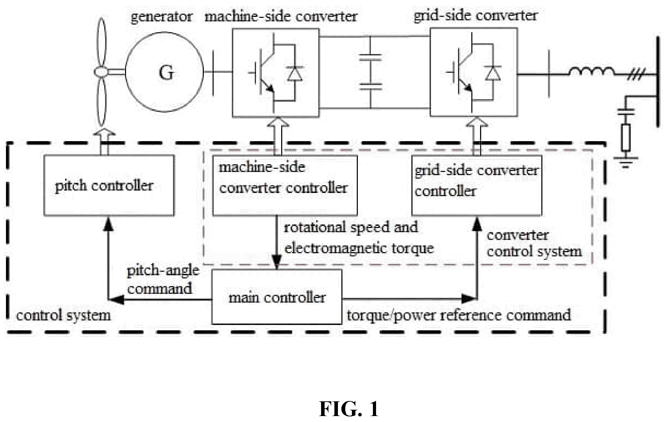

FIG. 1 is a schematic block diagram illustrating a converter control strategy for a wind turbine.

Referring to FIG. 1, a control system of a wind turbine may include a main controller, a pitch controller, and a converter control system. The converter control system includes a machine-side converter controller and a grid-side converter controller. The machine-side converter controller and the grid-side converter controller may be integrated into one controller, or may be provided separately. Signals can be transmitted between the machine-side converter controller and the grid-side converter controller. During a control process of the wind turbine, the main controller may issue a pitch-angle command to the pitch controller to adjust a mechanical torque of an impeller. Meanwhile, the main controller may issue control commands to the converter control system, and the machine-side converter controller and the grid-side converter controller may control the operation of the machine-side converter and the grid-side converter according to respective control commands issued by the main controller. Further, the machine-side converter controller may feed back the generator rotational speed and electromagnetic torque of the wind turbine to the main controller, and the main controller may issue a torque/power reference command to the grid-side converter controller based on the generator speed and the electromagnetic torque, such that the grid-side converter controller may perform torque control on the generator according to the torque/power reference command and control the grid-connected power of the wind turbine. Note that the converters of the wind turbine shown in FIG. 1 are three-level converters, but the present disclosure is not limited thereto.

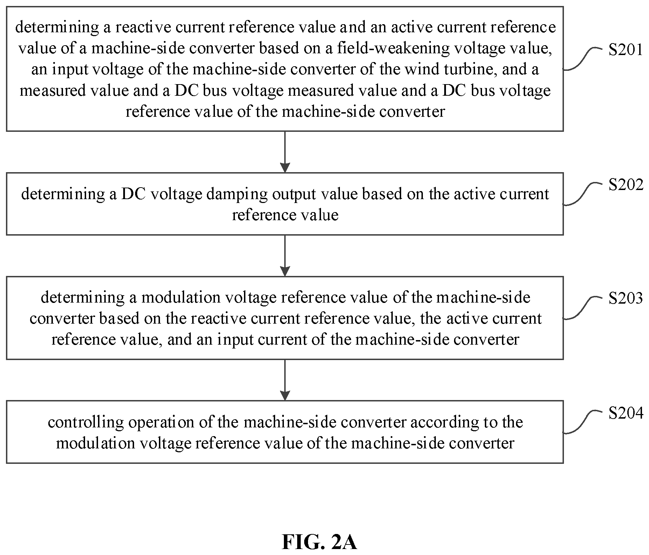

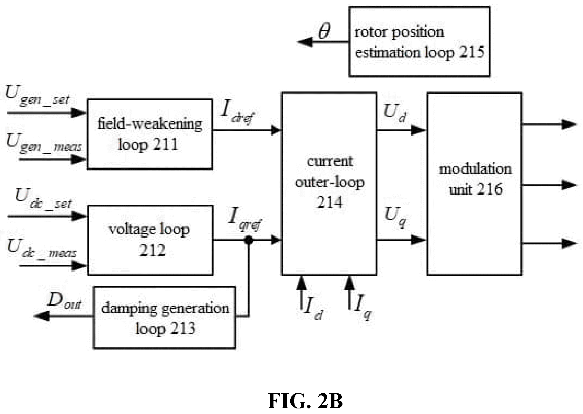

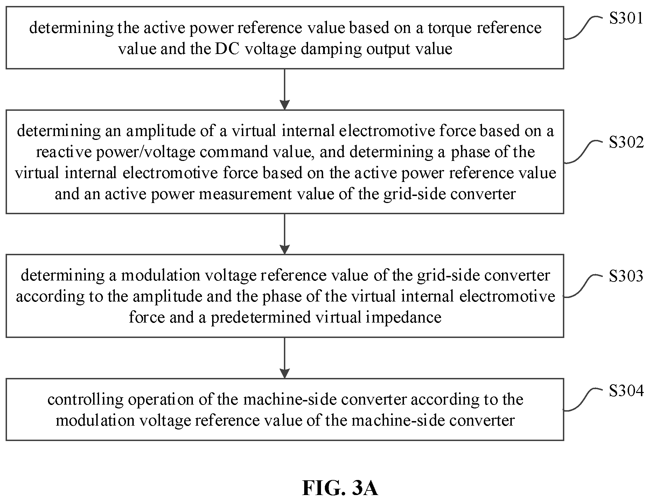

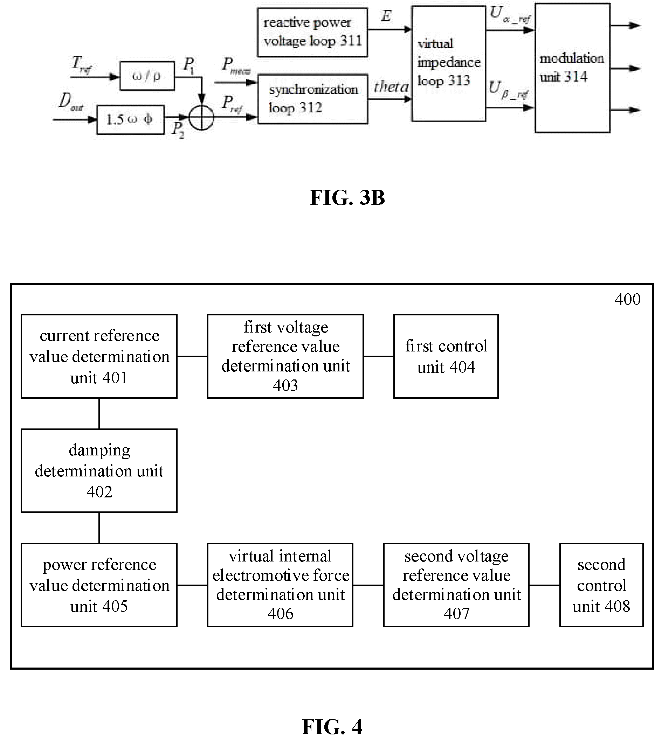

FIG. 2A is a flowchart illustrating a converter control method for a voltage-source wind turbine according to an embodiment of the present disclosure, and FIG. 2B is a schematic block diagram illustrating the converter control method for a voltage-source wind turbine according to an embodiment of the present disclosure. FIG. 3A is a flowchart illustrating a converter control method for a voltage-source wind turbine according to another embodiment of the present disclosure, and FIG. 3B is a schematic block diagram illustrating the converter control method for a voltage-source wind turbine according to another embodiment of the present disclosure. The converter control method for a voltage-source wind turbine according to embodiments of the present disclosure is preferably performed by a converter controller of the wind turbine (i.e., the converter control system shown in FIG. 1, which includes the machine-side converter controller and the grid-side converter controller). However, the present disclosure is not limited thereto. The converter control method for a voltage-source wind turbine may also be performed by a main controller of the wind turbine or other dedicated controllers.

Referring to FIG. 2A and FIG. 2B, a converter control method for a voltage-source wind turbine according to an embodiment of the present disclosure may include steps S201 to S204.

In step S201, a reactive current reference value *I_{dref}* and an active current reference value *I_{qref}* of a machine-side converter of the wind turbine may be determined based on a field-weakening voltage reference value *U_{gen_set},* an input voltage of the machine-side converter of the wind turbine, and a DC bus voltage measured value *U_{dc_meas}* and a DC bus voltage reference value *U_{dc_set}* of the machine-side converter. As described above, the wind turbine is a voltage-source wind turbine.

In an implementation, the reactive current reference value *I_{dref}* may be determined based on a difference between the field-weakening voltage reference value *U_{gen_set}* and an effective value *U_{gen_meas}* of the input voltage of the machine-side converter. For example, after calculating the difference between *U_{gen_set}* and *U_{gen_meas}*, the reactive current reference value *I_{dref}* may be obtained through a regulator (such as the field-weakening loop 211 shown in FIG. 2B). Here, various existing regulators (such as, but not limited to, a proportional ntegral (PI) regulator) may be used to obtain the reactive current reference value *I_{dref}* , and thus a detailed description thereof will be omitted. Furthermore, the field-weakening voltage reference value *U_{gen_set}* may be predetermined at the design stage of the wind turbine, and the method for determining the field-weakening voltage reference value *U_{gen_set}* is not limited in the present disclosure.

Further, the active current reference value *I_{qref}* may be determined based on a difference between the DC bus voltage measured value *U_{dc_meas}* and the DC bus voltage reference value *U_{dc_set}.* For example, after calculating the difference between *U_{dc_meas}* and *U_{dc_set},* the active current reference value *I_{dref}* may be obtained through a regulator (such as the voltage loop 212 shown in FIG. 2B). As described above, various existing regulators (such as, but not limited to, a PI regulator) may be used to obtain the active current reference value *I_{qref},* and thus a detailed description thereof will be omitted.

In step S202, a DC voltage damping output value *Dₒᵤₜ* may be determined based on the active current reference value *I_{qref}*. According to an embodiment of the present disclosure, the DC voltage damping output value *Dₒᵤₜ* is configured to determine an active power reference value *P_{ref}* of a grid-side converter of the wind turbine.

In an implementation, a product of the active current reference value *I*_{*q*ref} and a preset proportion coefficient K may be determined as the DC voltage damping output value *Dₒᵤₜ*, i.e., *Dₒᵤₜ* = *K* ∗ *I_{qref}*. As shown in FIG. 2B, the DC voltage damping output value *Dₒᵤₜ* may be calculated through a damping generation loop 213. Here, the preset proportion coefficient K may be greater than -1 and less than 1, and the preset proportion coefficient K does not equal to zero. The preset proportion coefficient may be preset by a person skilled in the art according to actual needs, and may be the same or different for different wind turbine.

In step S203, a modulation voltage reference value of the machine-side converter may be determined based on the reactive current reference value *I_{dref}*, the active current reference value *I_{qref}*, and an input current of the machine-side converter.

In an implemenation, first, the input current (e.g., a three-phase input current *i_{abc}*) of the machine-side converter may be transformed into a d-axis component *I_{d}* and a q-axis component *I_{q}* in a dq coordinate system (i.e., a two-phase rotating coordinate system) through coordinate transformation (e.g., Clarke-Park transformation, i.e., abc/dq transformation). Then, the modulation voltage reference value, i.e., the modulation voltage reference value *U_{d}* and *U_{q}* in the dq coordinate system, may be determined by performing current outer-loop control (such as the current outer-loop 214 shown in FIG. 2B) on the reactive current reference value *I_{qref}*, the active current reference value *I_{qref}*, and the d-axis component *I_{d}* and the q-axis component *I_{q}*. Here, the current outer-loop control is a common control method in converter control strategies for the voltage-source wind turbine, and thus a detailed description thereof will be omitted.

In step S204, operation of the machine-side converter may be controlled according to the modulation voltage reference values *U_{d}* and *U_{q}* of the machine-side converter.

According to an embodiment of the present disclosure, in order to control the operation of the machine-side converter, the converter control method for a voltage-source wind turbine according to an embodiment of the present disclosure may further include the following step: determining a rotor position angle θ based on the input voltage and the input current of the machine-side converter. Here, the input voltage and the input current of the machine-side converter may be respectively a three-phase input voltage and a three-phase input current. Various methods in the related art may be used to determine the rotor position angle θ based on the three-phase input voltage and the three-phase input current, and thus a detailed description thereof will be omitted. For example, as shown in FIG. 2B, the rotor position angle θ may be calculated through a rotor position estimation loop 215. Further, there is no particular sequence between the step of determining the rotor position angle and the above steps S201, S202, and S203, but it is only required to be performed before step S204.

Optionally, in step S204, the operation of the machine-side converter may be controlled according to the modulation voltage reference values *U_{d}* and *U_{q}* of the machine-side converter and the rotor position angle θ. For example, based on the rotor position angle θ, the modulation voltage reference values *U_{d}* and *U_{q}* in the dq coordinate system may be transformed into a three-phase voltage in an abc coordinate system or a two-phase voltage in an αβ coordinate system through coordinate transformation, which is then input to a modulation unit 216 (such as, but not limited to, a space vector pulse width modulation unit) shown in FIG. 2B for modulation, and the modulated three-phase voltage/two-phase voltage may be input to the machine-side converter to control the operation of the machine-side converter, thereby achieving control of the DC bus voltage.

The converter control method for a voltage-source wind turbine shown in FIG. 2A may be used as a machine-side converter control strategy and executed in the machine-side converter controller, but the present disclosure is not limited thereto.

Referring to FIG. 3A and FIG. 3B, the converter control method for a voltage-source wind turbine according to an embodiment of the present disclosure may further include steps S301 to S304.

In step S301, an active power reference value *P_{ref}* may be determined based on a torque reference value *T_{ref}* and the DC voltage damping output value *Dₒᵤₜ.*

In an implementation, a first component *P₁* of the active power reference value may be determined based on a preset coefficient, an angular velocity *ω* and a flux linkage *φ* of a generator of the wind turbine, and the DC voltage damping output value *Dₒᵤₜ.* For example, *P₁ =* 1.5*Dₒᵤₜωφ.* Further, a second component *P₂* of the active power reference value may be determined based on the preset coefficient, a number of pole pairs *p* of the generator, a torque reference value *T_{ref},* and the angular velocity *ω.* For example, ${P}_{2} = \frac{1}{p} \left(1.5{T}_{ref}ω\right)$*.* Here, the preset coefficient is shown as 1.5, but the present disclosure is not limited thereto. Subsequently, the active power reference value *P_{ref}* may be determined based on the first component *P₁* of the active power reference value and the second component *P₂* of the active power reference value. For example, *P_{ref}= P₁+ P₂.*

In step S302, an amplitude *E* of a virtual internal electromotive force may be determined based on a reactive power/voltage command value, and a phase *theta* of the virtual internal electromotive force may be determined based on the active power reference value *P_{ref}* and an active power measurement value *Pₘₑₐₛ* of the grid-side converter. As shown in FIG. 3B, the amplitude *E* of the virtual internal electromotive force may be determined by a reactive power/voltage loop 311 based on the reactive power/voltage command value. For example, the reactive power/voltage loop 311 may perform PI regulation on a difference between the reactive power/voltage command value received from the main controller and a voltage feedback value of the grid-side converter to obtain the amplitude *E* of the virtual internal electromotive force. Here, various methods in the related art may be used to determine the amplitude of the virtual internal electromotive force based on the reactive power/voltage command value, and thus a detailed description thereof will be omitted. Further, as shown in FIG. 3B, the phase *theta* of the virtual internal electromotive force is determined by a synchronization loop 312 based on the active power reference value *P_{ref}* and the active power measurement value *Pₘₑₐₛ* of the grid-side converter. For example, the synchronization loop 312 may determine a virtual angular frequency deviation based on an active power deviation (i.e., a difference between the active power reference value *P_{ref}* and the active power measurement value *Pₘₑₐₛ* of the grid-side converter), then determine a virtual angular frequency based on the virtual angular frequency deviation and a rated angular frequency of the grid, and finally determine the phase of the virtual internal electromotive force based on the virtual angular frequency. Here, various methods in the related art may be used to determine the phase of the virtual internal electromotive force based on the active power reference value *P_{ref} and* the active power measurement value *Pₘₑₐₛ* of the grid-side converter, and thus a detailed description thereof will be omitted.

In step S303, a modulation voltage reference values *U_{α_ref}* and *U_{β_ref}* of the grid-side converter may be determined according to the amplitude *E* and the phase *theta* of the virtual internal electromotive force and a predetermined virtual impedance. As shown in FIG. 3B, according to the amplitude *E* and the phase *theta* of the virtual internal electromotive force, modulation voltage reference values *U_{α_ref} and U_{β_ref}* in a two-phase stationary coordinate system (i.e., the αβ coordinate system) may be generated via a virtual impedance loop 313. Virtual impedance control technology is a common control method in voltage-source wind turbine, and thus a detailed description thereof is omitted here.

In step S304, operation of the grid-side converter may be controlled according to the modulation voltage reference values *U_{α_ref}* and *U_{β_ref}* of the grid-side converter. For example, the modulation voltage reference values *U_{α_ref}* and *U_{β_ref}* may be input to a modulation unit 314 (such as, but not limited to, a space vector pulse width modulation unit) shown in FIG. 3B for modulation, and the modulated three-phase voltage/two-phase voltage may be input to the grid-side converter to control the operation of the grid-side converter, thereby achieving voltage grid connection.

The converter control method for a voltage-source wind turbine shown in FIG. 3A may be used as a grid-side converter control strategy and executed in the grid-side converter controller, but the present disclosure is not limited thereto.

According to the converter control method for a voltage-source wind turbine as described above, when the wind turbine operates at high power, since the damping-based control is added, both the DC bus voltage of the converter and the generator torque can remain stable, thereby reducing the trend of low-frequency oscillation divergence, decreasing the risk of shutdown due to frequent activation of the braking resistor of the converter and converter faults, and ensuring the stability of the wind turbine during high-power operation.

FIG. 4 is a block diagram illusrating a converter control apparatus for a voltage-source wind turbine according to an embodiment of the present disclosure. The converter control apparatus 400 shown in FIG. 4 may be a converter control system of a wind turbine (i.e., a machine-side converter controller and a grid-side converter controller). However, the present disclosure is not limited thereto. The converter control apparatus 400 may also be a main controller of the wind turbine or other dedicated controllers.

Referring to FIG. 4, the converter control appratus 400 may include a current reference value determination unit 401, a damping determination unit 402, a first voltage reference value determination unit 403, and a first control unit 404. Optionally, the converter control apparatus 400 may further include a power reference value determination unit 405, a virtual internal electromotive force determination unit 406, a second voltage reference value determination unit 407, and a second control unit 408.

The current reference value determination unit 401 may determine a reactive current reference value *I_{dref}* and an active current reference value *I_{qref}* of a machine-side converter of the wind turbine based on a field-weakening voltage reference value *U_{gen_set},* an input voltage of the machine-side converter of the wind turbine, and a DC bus voltage measured value *U_{dc_meαs}* and a DC bus voltage reference value *U _{dc_set}* of the machine-side converter. In an implementation, the current reference value determination unit 401 may determine the reactive current reference value *I_{dref}* based on a difference between the field-weakening voltage reference value *U_{gen_set}* and an effective value *U_{gen_meas}* of the input voltage of the machine-side converter, and may determine the active current reference value *I_{qref}* based on a difference between the DC bus voltage measured value *U_{dc_meas}* and the DC bus voltage reference value *U_{dc_set}.*

The damping determination unit 402 may determine a DC voltage damping output value *Dₒᵤₜ* based on the active current reference value *I_{qref}.* According to an embodiment of the present disclosure, the DC voltage damping output value *Dₒᵤₜ* is configured to determine an active power reference value *P_{ref}* of a grid-side converter of the wind turbine. In an implementation, the damping determination unit 402 may determine a product of the active current reference value *I_{qref}* and a preset proportion coefficient K as the DC voltage damping output value *Dₒᵤₜ,* i.e., *Dₒᵤₜ = K * I_{qref}.* Here, the preset proportion coefficient K may be greater than -1 and less than 1, and the preset proportion coefficient K does not equal to zero.

The first voltage reference value determination unit 403 may determine a modulation voltage reference value of the machine-side converter based on the reactive current reference value *I_{dref},* the active current reference value *I_{qref},* and an input current of the machine-side converter. In an implementaion, the first voltage reference value determination unit 403 may transform the input current (e.g., a three-phase input current *i_{abc}*) of the machine-side converter into a d-axis component *I_{d}* and a q-axis component *I_{q}* in a dq coordinate system (i.e., a two-phase rotating coordinate system) through coordinate transformation (e.g., Clarke-Park transformation, i.e., abc/dq transformation), and may determine the modulation voltage reference value, i.e., the modulation voltage reference value *U_{d}* and *U_{q}* in the dq coordinate system, by performing current outer-loop control on the reactive current reference value *I_{dref},* the active current reference value *I_{qref},* and the d-axis component *I_{d}* and the q-axis component *I_{q}.*

The first control unit 404 may control operation of the machine-side converter according to the modulation voltage reference values *U_{d}* and *U_{q}* of the machine-side converter. Optionally, to control the operation of the machine-side converter, the first control unit 404 may further include a rotor position angle determination unit (not shown). The rotor position angle determination unit is configured to determine a rotor position angle θ based on the input voltage and the input current of the machine-side converter. As such, the first control unit 404 may control the operation of the machine-side converter according to the modulation voltage reference values *U_{d}* and *U_{q}* of the machine-side converter and the rotor position angle θ. For example, the first control unit 404 may transform, based on the rotor position angle θ, the modulation voltage reference values *U_{d}* and *U_{q}* in the dq coordinate system into a three-phase voltage in an abc coordinate system or a two-phase voltage in an αβ coordinate system through coordinate transformation, which is then input to a modulation unit (such as, but not limited to, a space vector pulse width modulation unit) for modulation, and may input the modulated three-phase voltage/two-phase voltage to the machine-side converter to control the operation of the machine-side converter, thereby achieving control of the DC bus voltage.

The power reference value determination unit 405 may determine an active power reference value *P_{ref}* based on a torque reference value *T_{ref}* and the DC voltage damping output value *Dₒᵤₜ.*

In an implementation, the power reference value determination unit 405 may determine a first component *P₁* of the active power reference value based on a preset coefficient, an angular velocity *ω* and a flux linkage *φ* of a generator of the wind turbine, and the DC voltage damping output value *Dₒᵤₜ,* and may determine a second component *P₂* of the active power reference value based on the preset coefficient, a number of pole pairs *p* of the generator, a torque reference value *T_{ref},* and the angular velocity *ω*. Subsequently, the power reference value determination unit 405 may determinethe active power reference value *P_{ref}* based on the first component *P₁* of the active power reference value and the second component *P₂* of the active power reference value.

The virtual internal electromotive force determination unit 406 may determine an amplitude *E* of a virtual internal electromotive force based on a reactive power/voltage command value, and determine a phase *theta* of the virtual internal electromotive force based on the active power reference value *P_{ref}* and an active power measurement value *Pₘₑₐₛ* of the grid-side converter.

The second voltage reference value determination unit 407 may determine a modulation voltage reference values *U_{α_ref}* and *U_{β_ref}* of the grid-side converter according to the amplitude *E* and the phase *theta* of the virtual internal electromotive force and a predetermined virtual impedance.

The second control unit 408 may control operation of the grid-side converter according to the modulation voltage reference values *U_{α_ref}* and *U_{β_ref}* of the grid-side converter. For example, the second control unit 408 may input the modulation voltage reference values *U_{α_ref}* and *U_{β_ref}* to a modulation unit (such as, but not limited to, a space vector pulse width modulation unit) for modulation, and the modulated three-phase voltage/two-phase voltage may be input to the grid-side converter to control the operation of the grid-side converter, thereby achieving voltage grid connection.

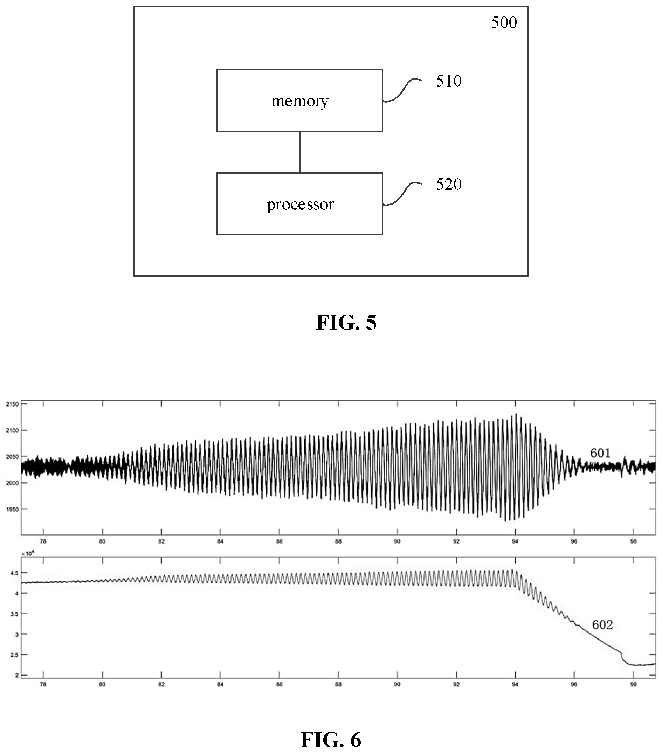

FIG. 5 is a block diagram showing a computing device according to an embodiment of the present disclosure. The computing device 500 may be implemented as a converter controller for a voltage-source wind turbine (i.e., a machine-side converter controller and a grid-side converter controller). However, the present disclosure is not limited thereto. The computing device 500 may also be implemented as a main controller of the voltage-source wind turbine or other controllers, or implemented in a main controller, a converter controller, or other controllers of the voltage-source wind turbine.

Referring to FIG. 5, a computing device 500 according to an embodiment of the present disclosure may include a processor 510 and a memory 520. The processor 510 may include, but is not limited to, a central processing unit (CPU), a digital signal processor (DSP), a microcomputer, a field programmable gate array (FPGA), a system on chip (SoC), a microprocessor, an application specific integrated circuit (ASIC), and the like. The memory 520 stores a computer program to be executed by the processor 510. The memory 520 includes a high-speed random access memory and/or a non-volatile computer-readable storage medium. When the processor 510 executes the computer program stored in the memory 520, the converter control method for a voltage-source wind turbine as described above may be implemented.

Optionally, the computing device 500 may communicate with various components within the voltage-source wind turbine via wired/wireless communication methods, and may also communicate with devices external to the voltage-source wind turbine and/or the wind farm via wired/wireless communication methods.

According to an embodiment of the present disclosure, a voltage-source wind turbine may be provided. The voltage-source wind turbine includes the converter control apparatus as described above or the computing device as described above.

The converter control method for a voltage-source wind turbine according to an embodiment of the present disclosure may be written as a computer program and stored on a computer-readable storage medium. When the computer program is executed by a processor, the converter control method for a voltage-source wind turbine as described above may be implemented. Examples of computer-readable storage media include: read-only memory (ROM), random access programmable read-only memory (PROM), electrically erasable programmable read-only memory (EEPROM), random access memory (RAM), dynamic random access memory (DRAM), static random access memory (SRAM), flash memory, non-volatile memory, CD-ROM, CD-R, CD+R, CD-RW, CD+RW, DVD-ROM, DVD-R, DVD+R, DVD-RW, DVD+RW, DVD-RAM, BD-ROM, BD-R, BD-R LTH, BD-RE, Blu-ray or optical disc storage, hard disk drive (HDD), solid state drive (SSD), card-type memory (such as a multimedia card, a secure digital (SD) card, or an extreme digital (XD) card), magnetic tape, floppy disk, magneto-optical data storage device, optical data storage device, hard disk, solid state disk, and any other device configured to store a computer program and any associated data, data files, and data structures in a non-transitory manner and provide the computer program and any associated data, data files, and data structures to a processor or computer such that the processor or computer can execute the computer program. In one example, the computer program and any associated data, data files, and data structures are distributed over networked computer systems so that the computer program and any associated data, data files, and data structures are stored, accessed, and executed in a distributed fashion by one or more processors or computers.

FIG. 6 is a graph showing curves of a DC bus voltage and a generator torque value during high-power operation of an existing voltage-source wind turbine without damping-based control.

Referring to FIG. 6, during high-power operation of an existing voltage-source wind turbine without damping-based control, the DC bus voltage gradually exhibits low-frequency oscillation divergence (as shown by curve 601). The maximum value of the DC bus voltage increases from 2025V during normal operation to 2140V. At the same time, the generator torque value continuously exhibits low-frequency oscillation upon reaching 42500 N·m (as shown by curve 602). It can be seen that in the existing voltage-source wind turbine without damping-based control, normal steady-state operation under high power cannot be satisfied, and the continuous oscillation divergence of the DC bus voltage will lead to an overvoltage of the DC bus voltage, while a further increase in the oscillation amplitude of the generator torque will severely deteriorate the operating performance of the wind turbine and the stability of the converter control.

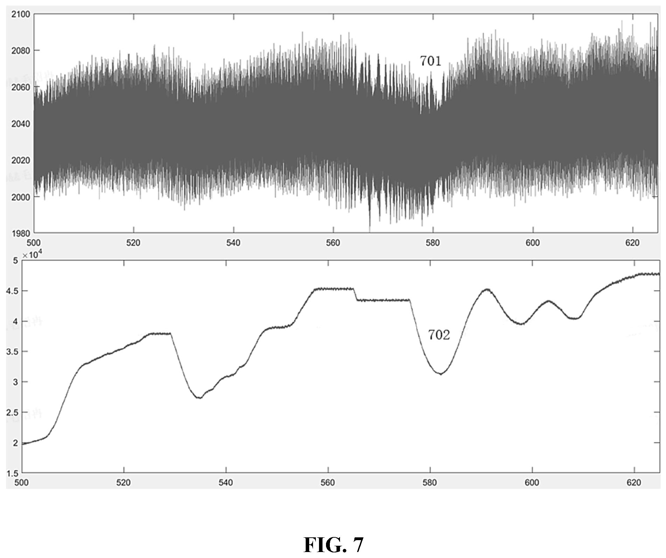

FIG. 7 is a graph illusratrating curves of a DC bus voltage and a generator torque value during high-power operation of a voltage-source wind turbine according to an embodiment of the present disclosure.

Referring to FIG. 7, when the voltage-source wind turbine operates at a high power, since the damping-based control is applied, the DC bus voltage can be stabilized around 2030V (as shown by curve 701), without a trend of low-frequency oscillation divergence, greatly reducing the risk of shutdown due to frequent activation of the braking resistor of the machine-side converter and converter faults. At the same time, the generator torque can stably operate at 45000 N·m (as shown by curve 702), thereby ensuring the stability of the wind turbine under high-power operation.

According to the converter control method and the converter control apparatus for a voltage-source wind turbine of the embodiments of the present disclosure, by calculating a damping output value in a machine-side control strategy of a converter controller and applying the damping output value in a grid-side control strategy to achieve damping-based control, the control stability of the voltage-source wind turbine during high-power operation is improved, the problem of low-frequency oscillation divergence in the DC bus voltage of the converter and the generator torque is avoided, the risk of shutdown due to frequent activation of the braking resistor of the machine-side converter and converter fault is effectively reduced, and the power generation loss of the wind turbine due to faults is reduced.

Although some embodiments of the present disclosure have been shown and described, it would be appreciated by those skilled in the art that changes may be made in these embodiments without departing from the principles and spirit of the disclosure, the scope of which is defined in the claims and their equivalents.

## Claims

1. A converter control method for a voltage-source wind turbine, comprising:
determining a reactive current reference value and an active current reference value of a machine-side converter based on a field-weakening voltage value, an input voltage of the machine-side converter of the wind turbine, and a direct current (DC) bus voltage measured value and a DC bus voltage reference value of the machine-side converter;
determining a DC voltage damping output value based on the active current reference value, wherein the DC voltage damping output value is configured to determine an active power reference value of a grid-side converter of the wind turbine;
determining a modulation voltage reference value of the machine-side converter based on the reactive current reference value, the active current reference value, and an input current of the machine-side converter; and
controlling operation of the machine-side converter according to the modulation voltage reference value of the machine-side converter.

2. The converter control method of claim 1, wherein the converter control method further comprises:
determining the active power reference value based on a torque reference value and the DC voltage damping output value;
determining an amplitude of a virtual internal electromotive force based on a reactive power/voltage command value, and determining a phase of the virtual internal electromotive force based on the active power reference value and an active power measurement value of the grid-side converter;
determining a modulation voltage reference value of the grid-side converter according to the amplitude and the phase of the virtual internal electromotive force and a predetermined virtual impedance; and
controlling operation of the grid-side converter according to the modulation voltage reference value of the grid-side converter.

3. The converter control method of claim 1, wherein the converter control method further comprises:
determining a rotor position angle based on the input voltage and the input current of the machine-side converter;
wherein the controlling operation of the machine-side converter according to the modulation voltage reference value of the machine-side converter comprises: controlling the operation of the machine-side converter according to the modulation voltage reference value of the machine-side converter and the rotor position angle.

4. The converter control method of claim 1, wherein the determining a reactive current reference value and an active current reference value of a machine-side converter comprises:
determining the reactive current reference value based on a difference between the field-weakening voltage reference value and an effective value of the input voltage of the machine-side converter; and
determining the active current reference value based on a difference between the DC bus voltage measured value and the DC bus voltage reference value.

5. The converter control method of claim 1, wherein the determining a DC voltage damping output value comprises: determining a product of the active current reference value and a preset proportion coefficient as the DC voltage damping output value.

6. The converter control method of claim 1, wherein the determining a modulation voltage reference value of the machine-side converter comprises:
transforming the input current of the machine-side converter into a d-axis component and a q-axis component in a dq coordinate system through coordinate transformation; and
determining the modulation voltage reference value by performing current outer-loop control on the reactive current reference value, the active current reference value, and the d-axis component and the q-axis component.

7. The converter control method of claim 2, wherein the determining an active power reference value comprises:
determining a first component of the active power reference value based on a preset coefficient, an angular velocity and a flux linkage of a generator of the wind turbine, and the DC voltage damping output value;
determining a second component of the active power reference value based on the preset coefficient, a number of pole pairs of the generator, the torque reference value, and the angular velocity; and
determining the active power reference value based on the first component of the active power reference value and the second component of the active power reference value.

8. A converter control apparatus for a voltage-source wind turbine, comprising:
a current reference value determination unit configured to determine a reactive current reference value and an active current reference value of a machine-side converter based on a field-weakening voltage value, an input voltage of the machine-side converter of the wind turbine, and a direct current (DC) bus voltage measured value and a DC bus voltage reference value of the machine-side converter;
a damping determination unit configured to determine a DC voltage damping output value based on the active current reference value, wherein the DC voltage damping output value is configured to determine an active power reference value of a grid-side converter of the wind turbine;
a first voltage reference value determination unit configured to determine a modulation voltage reference value of the machine-side converter based on the reactive current reference value, the active current reference value, and an input current of the machine-side converter; and
a first control unit configured to control operation of the machine-side converter according to the modulation voltage reference value of the machine-side converter.

9. The converter control apparatus of claim 8, wherein the converter control apparatus further comprises:
a power reference value determination unit configured to determine the active power reference value based on a torque reference value and the DC voltage damping output value;
a virtual internal electromotive force determination unit configured to determine an amplitude of a virtual internal electromotive force based on a reactive power/voltage command value, and determine a phase of the virtual internal electromotive force based on the active power reference value and an active power measurement value of the grid-side converter;
a second voltage reference value determination unit configured to determine a modulation voltage reference value of the grid-side converter according to the amplitude and the phase of the virtual internal electromotive force and a predetermined virtual impedance; and
a second control unit configured to control operation of the grid-side converter according to the modulation voltage reference value of the grid-side converter.

10. The converter control apparatus of claim 8, wherein the converter control apparatus further comprises:
a rotor position angle determination unit configured to: determine a rotor position angle based on the input voltage and the input current of the machine-side converter;
wherein the first control unit is configured to control the operation of the machine-side converter according to the modulation voltage reference value of the machine-side converter and the rotor position angle.

11. The converter control apparatus of claim 8, wherein the current reference value determination unit is configured to:
determine the reactive current reference value based on a difference between the field-weakening voltage reference value and an effective value of the input voltage of the machine-side converter; and
determine the active current reference value based on a difference between the DC bus voltage measured value and the DC bus voltage reference value.

12. The converter control apparatus of claim 8, wherein the damping determination unit is configured to: determine a product of the active current reference value and a preset proportion coefficient as the DC voltage damping output value.

13. A computing device, comprising:
a processor; and
a memory storing a computer program, wherein when the computer program is executed by the processor, the converter control method for a voltage-source wind turbine according to any one of claims 1 to 7 is implemented.

14. The computing device of claim 13, wherein the computing device is a converter controller for a voltage-source wind turbine.

15. A voltage-source wind turbine, comprising the converter control apparatus according to any one of claims 8 to 12, or the computing device according to claim 13 or 14.
